# EUROPÄISCHE PATENTANMELDUNG

(11) **EP 4 851 848 A2**
(43) Veröffentlichungstag der Anmeldung: **09.12.2026**
(21) Anmeldenummer: 26181802.5
(22) Anmeldetag: 29.05.2026
(51) Int. Cl.: G06F 40/30, G06F 40/56

(54) **VERFAHREN UND EIN SYSTEM ZUR ERSTELLUNG EINES ERWIDERUNGSENTWURFS**

(30) Priorität: 04.06.2025 DE 102025121943
(71) Anmelder: FORBENCAP GmbH, 87527 Sonthofen (DE)
(72) Erfinder: Götz, Stefan, 85659 Forstern (DE)
(74) Vertreter: advotec.

(57) **Zusammenfassung**

Verfahren zur automatisierten Erstellung eines Erwiderungsentwurfs auf einen Prüfungsbescheid zu einer Patentanmeldung, wobei das Verfahren die folgenden Schritte umfasst: Empfangen (S1) des Prüfungsbescheids sowie der zugehörigen Anmeldeakte in elektronischer Form durch eine Empfangseinheit (102); Abrufen (S2) mindestens eines jurisdiktionsspezifischen Regelsatzes in Abhängigkeit vom empfangenen Prüfungsbescheid durch eine Regelwerkseinheit (104); Auffordern (S3) eines Sprachmodells (106) unter Verwendung des Inhalts des Prüfungsbescheids, der Anmeldeakte und des abgerufenen Regelsatzes zur Generierung eines ersten Erwiderungsentwurfs, wobei eine Retrieval-Augmentation zur kontextuellen Anreicherung eingesetzt wird; Überprüfen (S4) des ersten Erwiderungsentwurfs durch ein Konsistenzprüfmodul (108), um automatisiert festzustellen, ob jede argumentative Aussage mit dem aktuellen Anspruchssatz logisch und formal übereinstimmt; und Bereitstellen (S5) eines als konsistent validierten Erwiderungsentwurfs in einem strukturierten, editierbaren Ausgabeformat durch eine Ausgabeeinheit (110).

## Beschreibung

Die Erfindung betrifft ein Verfahren und ein System zur automatisierten Erstellung eines Erwiderungsentwurfs auf einen Prüfungsbescheid zu einer Patentanmeldung.

### Stand der Technik

Im Rahmen des Patenterteilungsverfahrens werden durch die zuständigen Patentämter Prüfungsbescheide erstellt, in denen formale oder materielle Beanstandungen zur eingereichten Patentanmeldung festgehalten sind. Der Anmelder ist daraufhin verpflichtet, in einer sachgerechten und fristgerechten Erwiderung auf diese Beanstandungen einzugehen. Die Erstellung solcher Erwiderungsschreiben erfolgt bislang typischerweise durch Patentanwälte oder Fachsachbearbeiter manuell. Hierzu müssen der Prüfungsbescheid sowie die zugehörige Anmeldeakte sorgfältig analysiert, einschlägige Regelwerke der betreffenden Jurisdiktion berücksichtigt und eine schlüssige argumentative Auseinandersetzung mit den vom Prüfer angeführten Einwänden formuliert werden. Dieser Prozess ist in der Praxis zeitintensiv, fehleranfällig und erfordert juristische sowie technische Expertise. Zudem wird häufig auf wiederkehrende Textmuster und Argumentationsstrukturen zurückgegriffen, was jedoch kaum systematisch unterstützt wird. Digitale Hilfsmittel beschränken sich meist auf einfache Vorlagenverwaltung oder Dokumentenmanagementsysteme. Eine tiefere Automatisierung oder intelligente Entscheidungsunterstützung bei der Ausarbeitung der Erwiderungen ist im Stand der Technik bislang nicht realisiert. Die zunehmende Komplexität von Prüfungsbescheiden und der steigende Kostendruck auf Patentdienstleistungen verdeutlichen den Bedarf nach effizienteren Lösungen.

Es ist eine Aufgabe der Erfindung, ein Verfahren und/oder ein System zur Verfügung zu stellen, das eine automatisierte und konsistente Erstellung von Erwiderungsentwürfen auf Prüfungsbescheide ermöglicht und dabei bestehende strukturelle und inhaltliche Anforderungen berücksichtigt.

### Offenbarung der Erfindung

Die Aufgabe wird gelöst durch ein Verfahren gemäß den Merkmalen des Patentanspruchs 1. Die Aufgabe wird gelöst durch ein Verfahren gemäß den Merkmalen des Patentanspruchs 12. Die Aufgabe wird gelöst durch ein System gemäß den Merkmalen des Patentanspruchs 15.

Gemäß einem ersten Aspekt wird ein Verfahren zur automatisierten Erstellung eines Erwiderungsentwurfs auf einen Prüfungsbescheid zu einer Patentanmeldung vorgeschlagen, wobei das Verfahren die folgenden Schritte umfasst: Empfangen des Prüfungsbescheids sowie der zugehörigen Anmeldeakte in elektronischer Form; Abrufen mindestens eines jurisdiktionsspezifischen Regelsatzes in Abhängigkeit vom empfangenen Prüfungsbescheid; Auffordern eines Sprachmodells unter Verwendung des Inhalts des Prüfungsbescheids, der Anmeldeakte und des abgerufenen Regelsatzes zur Generierung eines ersten Erwiderungsentwurfs, wobei eine Retrieval-Augmentation zur kontextuellen Anreicherung eingesetzt wird; Überprüfen des ersten Erwiderungsentwurfs durch ein Konsistenzprüfmodul, um automatisiert festzustellen, ob jede argumentative Aussage mit dem aktuellen Anspruchssatz logisch und formal übereinstimmt; und Bereitstellen eines als konsistent validierten Erwiderungsentwurfs in einem strukturierten, editierbaren Ausgabeformat.

Es versteht sich, dass die erfindungsgemäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Gemäß einem zweiten Aspekt wird ein System zur automatisierten Erstellung eines Erwiderungsentwurfs auf einen Prüfungsbescheid zu einer Patentanmeldung vorgeschlagen, wobei das System eine Auswerte- und Recheneinrichtung aufweist, die dazu ausgebildet ist, die Schritte des vorstehenden Verfahrens auszuführen.

Ein Verfahren zur automatisierten Erstellung eines Erwiderungsentwurfs auf einen Prüfungsbescheid beginnt vorzugsweise mit dem elektronischen Empfang sowohl des Prüfungsbescheids als auch der zugehörigen Anmeldeakte. Der Prüfungsbescheid enthält vorzugsweise die von der Patentprüfungsstelle festgestellten Beanstandungen in Bezug auf eine Patentanmeldung, während die Anmeldeakte sämtliche relevanten Anmeldedaten und Schriftstücke umfasst. Der elektronische Empfang ermöglicht eine unmittelbare digitale Weiterverarbeitung ohne Medienbrüche, was die Reaktionszeit auf amtliche Schreiben verkürzt.

Die vorliegende Erfindung betrifft in einer bevorzugten Ausgestaltung nicht lediglich die sprachliche Erzeugung eines Antworttextes, sondern eine technische Vorverarbeitung, Strukturierung und maschinenlesbare Repräsentation heterogener elektronischer Anmeldungsunterlagen. Die Erfindung löst insbesondere das technische Problem, aus uneinheitlich formatierten elektronischen Dokumenten, insbesondere PDF-, DOCX-, XML- und/oder bildbasierten Dokumenten, eine konsistente, layoutverankerte und graphbasierte Datenstruktur zu erzeugen, die eine speicher- und rechenressourcenschonende Weiterverarbeitung durch ein Sprachmodell und/oder ein Konsistenzprüfmodul ermöglicht. Hierzu werden Dokumentsegmente nicht lediglich nach ihrem semantischen Inhalt verarbeitet, sondern anhand technischer Dokumentanker, insbesondere Seitenkoordinaten, Zeichenoffsets, Absatzkennungen, Figurenkoordinaten, Bezugszeichenpositionen und Anspruchsabhängigkeiten, in einer maschinenlesbaren Datenstruktur abgelegt.

In einer Ausführungsform wird aus dem aktuellen Anspruchssatz ein Anspruchsgraph erzeugt. Dabei werden einzelne Anspruchsmerkmale, Untermerkmale, Rückbezüge, Antezedenzbezüge, Bezugszeichen, Anspruchsabhängigkeiten und fakultative Merkmalsgruppen jeweils als Knoten oder Kanten des Anspruchsgraphen repräsentiert. Jedem Knoten wird vorzugsweise wenigstens ein Dokumentanker zugeordnet, der eine Position des betreffenden Merkmals innerhalb des elektronischen Dokuments angibt, insbesondere eine Seitenzahl, einen Absatzindex, einen Zeichenoffset, eine Bounding-Box-Koordinate und/oder eine XML-Pfadkennung. Der Anspruchsgraph bildet somit eine technische Zwischendarstellung der elektronischen Anmeldungsunterlagen, welche eine automatische Prüfung ermöglicht, ob ein später erzeugtes Textsegment auf ein tatsächlich im Anspruchssatz vorhandenes Merkmal verweist.

Anschließend wird vorzugsweise ein oder mehrere jurisdiktionsspezifische Regelsätze abgerufen. Diese Regelsätze umfassen vorzugsweise verfahrensrechtliche und formale Vorgaben der jeweiligen Patentbehörde sowie sprachliche oder strukturelle Anforderungen, die in Erwiderungsschreiben zu beachten sind. Durch die automatische Berücksichtigung solcher Regelwerke kann eine an die jeweilige Rechtsordnung angepasste Erwiderung vorbereitet werden.

Ein Sprachmodell, vorzugsweise ein großes Sprachmodell (Large Language Model), wird daraufhin aufgefordert, einen ersten Entwurf für die Erwiderung zu generieren. Dabei verwendet es den Inhalt des Prüfungsbescheids, die Anmeldeakte sowie den abgerufenen Regelsatz. Große Sprachmodelle sind vorzugsweise künstliche neuronale Netze, die auf umfangreichen Textkorpora trainiert wurden und in der Lage sind, natürliche Sprache in kohärenter Weise zu verstehen und zu erzeugen. Die Aufforderung erfolgt in Form eines Promptings, wobei relevante Inhalte bereitgestellt werden, um eine zielgerichtete Generierung zu ermöglichen. Zur Erhöhung der Relevanz der eingebundenen Informationen wird vorzugsweise eine sogenannte Retrieval-Augmentation eingesetzt, bei der externe Inhalte über vektorbasierte Ähnlichkeitssuche selektiv eingebunden werden. Dies erhöht die Genauigkeit und Kontextualität der erzeugten Texte.

Der erzeugte Entwurf wird automatisiert durch ein Konsistenzprüfmodul überprüft. Dieses Modul vergleicht vorzugsweise jede argumentative Aussage im Entwurf mit dem aktuellen Wortlaut des Anspruchssatzes auf logische und formale Übereinstimmung. Dabei können syntaktische und semantische Analysen eingesetzt werden, um sicherzustellen, dass die Antwort keine widersprüchlichen oder nicht abgestimmten Aussagen enthält. Diese automatisierte Überprüfung erhöht die inhaltliche Zuverlässigkeit und verringert das Risiko unzulässiger oder irreführender Argumentationen.

Abschließend wird der als konsistent validierte Entwurf in einem strukturierten und bearbeitbaren Ausgabeformat bereitgestellt. Dieses Format ist vorzugsweise so gestaltet, dass es sowohl maschinell weiterverarbeitet als auch manuell editiert werden kann. Eine strukturierte Ausgabe erleichtert die Integration in bestehende Arbeitsprozesse und fördert die Nachvollziehbarkeit der einzelnen Argumentationsschritte. Dadurch wird die Qualität und Effizienz der Erstellung von Erwiderungen auf amtliche Prüfungsbescheide deutlich gesteigert.

Das System zur automatisierten Erstellung eines Erwiderungsentwurfs auf einen Prüfungsbescheid umfasst vorzugsweise eine Auswerte- und Recheneinrichtung, die software- und/oder hardwareseitig ausgestaltet ist und funktional dazu eingerichtet ist, die Verfahrensschritte zur Verarbeitung der empfangenen Eingabedaten und zur Generierung des Erwiderungsentwurfs vollständig oder in Teilen umzusetzen. Diese Auswerte- und Recheneinrichtung kann in Form einer zentralen Serverarchitektur, als on-premise Installation oder in einer verteilten Cloud-Umgebung betrieben werden. In einer Ausführungsform erfolgt die Ausführung vollständig lokal auf einem verschlüsselten Server, wobei alle Verarbeitungsschritte datenschutzkonform intern verbleiben. Alternativ kann eine hybride Architektur genutzt werden, in der einzelne Berechnungsprozesse, insbesondere speicherintensive Aufgaben wie die Ausführung des Sprachmodells, in einer sicheren Cloud-Infrastruktur erfolgen.

Das System kann funktional in einzelne Komponenten oder Einheiten unterteilt sein, wobei unter einer "Einheit" vorzugsweise eine logisch abgegrenzte Software- und/oder Hardwarekomponente zu verstehen ist, die eine bestimmte Teilaufgabe übernimmt. Eine Empfangseinheit verarbeitet den elektronischen Eingang der relevanten Dokumente, insbesondere des Prüfungsbescheids und der Anmeldeakte. Eine Regelwerkseinheit ist dafür vorgesehen, aus einer Datenbank oder einem konfigurierbaren Regelwerksspeicher die für die jeweilige Jurisdiktion zutreffenden rechtlichen und formalen Vorgaben abzurufen. Eine Spracheinheit, vorzugsweise in Form eines großen Sprachmodells, erzeugt auf Basis dieser Eingaben einen ersten Entwurf. Eine Prüfeinheit analysiert den erzeugten Text im Hinblick auf Konsistenz mit dem Anspruchssatz. Schließlich stellt eine Ausgabeeinheit den validierten Entwurf in einem bearbeitbaren, strukturierten Format bereit.

Das eingesetzte Sprachmodell ist vorzugsweise ein tiefes neuronales Netz, das mittels überwachtem Lernen auf einem Korpus domänenspezifischer Textdaten trainiert wurde. Der Trainingsdatensatz umfasst vorzugsweise historische Prüfungsbescheide, zugehörige Erwiderungsschreiben sowie Informationen zu deren Verfahrensausgang (z. B. Erteilung, Zurückweisung). Diese Daten sind so ausgewählt und kuratiert, dass sie den Anforderungen der EPA-Richtlinien an Klarheit, Stützung und Einheitlichkeit entsprechen. Ergänzend können strukturierte juristische Regelwerke, formale Formulierungshilfen und Entscheidungsbegründungen aus amtlicher Rechtsprechung Bestandteil des Trainingskorpus sein.

Die Eingabedaten des Sprachmodells bestehen vorzugsweise aus einer Kombination strukturierter Dokumenteninhalte (z. B. gegliederte Prüfungsbescheide), freitextlicher Beschreibungen, sowie Annotationen zu relevanten Rechtsnormen. Diese werden dem Modell in einem Prompt-Format bereitgestellt, das sowohl Kontextinformationen als auch spezifische Fragestellungen umfasst. Die Ausgabedaten des Modells sind vorzugsweise fließtextlich strukturierte Erwiderungstexte, die argumentative Elemente enthalten und im Idealfall bereits Formulierungsvorschläge im gewünschten juristischen Duktus beinhalten. Die Ausgabe kann zusätzlich Metadaten enthalten, etwa zu Objection-Tags oder Anspruchsreferenzen.

Ein praktisches Ausführungsbeispiel zeigt sich bei einer europäischen Patentanmeldung, bei der ein Prüfungsbescheid eine Zurückweisung wegen mangelnder erfinderischer Tätigkeit gemäß Art. 56 EPÜ enthält. Das System analysiert automatisch die Einwände unter Rückgriff auf die in der Anmeldeakte enthaltenen Ausführungsbeispiele und den Stand der Technik. Anschließend generiert das Sprachmodell einen Erwiderungsentwurf, in dem die Unterschiede zum nächstliegenden Stand der Technik unter Verwendung EPA-konformer Argumentationsmuster dargelegt werden.

Ein weiteres Ausführungsbeispiel betrifft eine nationale Anmeldung beim DPMA, bei der formale Mängel an der Anspruchsfassung beanstandet wurden. Das System identifiziert durch syntaktische Analyse die betroffenen Anspruchsmerkmale, schlägt eine juristisch korrekte Umformulierung vor und ergänzt automatische Textbausteine zur Rückweisung der Beanstandung. Über die Benutzerschnittstelle kann der Entwurf manuell feinjustiert werden, wobei das Modell Änderungen iterativ berücksichtigt.

Durch diese Strukturierung, Modularität und datenbasierte Intelligenz wird der Arbeitsaufwand für die Bearbeitung von Prüfungsbescheiden erheblich reduziert und gleichzeitig die formale und argumentative Qualität der Antworten verbessert.

Das beschriebene Verfahren löst ein technisches Problem mit technischen Mitteln, da es eine systemgestützte Verarbeitung komplexer, juristisch-technischer Dokumente ermöglicht, die bisher ausschließlich manuell unter erheblichem Zeit- und Fachwissenseinsatz vorgenommen wurde. Die automatisierte Erstellung eines konsistenten, an formale Vorgaben angepassten Erwiderungsentwurfs stellt keine bloße Automatisierung bekannter Arbeitsschritte dar, sondern beruht auf einem gezielten Zusammenwirken mehrerer technischer Komponenten, insbesondere der strukturierten Datenextraktion, der Retrieval-Augmentation sowie der modellgestützten Texterzeugung und formallogischen Konsistenzprüfung. Die Lösung adressiert insbesondere die maschinelle Interpretation und Generierung juristischer Fachtexte unter Berücksichtigung verfahrensspezifischer Regelwerke, was über das reine Verarbeiten von Text hinausgeht.

Durch das gezielte Trainieren des Sprachmodells auf verfahrensspezifische Textmuster in Kombination mit einer formalisierten Prüfung der Modellantwort wird ein reproduzierbares, nachvollziehbares und prozesssicheres Ergebnis erzeugt. Das Verfahren stellt somit eine neuartige technische Lösung für ein konkretes technisches Problem dar, die sich deutlich vom allgemeinen Stand der Technik abhebt und über eine rein administrative oder organisatorische Maßnahme hinausgeht.

Die für das Verfahren gemachten Ausführungen gelten für das System entsprechend. Dabei versteht es sich, dass sprachliche Abwandlungen von verfahrensmäßig formulierten Merkmalen nach sprachüblicher Praxis für das System umformulierbar sind, ohne dass derartige Formulierungen explizit hier aufgeführt werden müssen.

In einem weiteren Aspekt wird vorgeschlagen, dass die Retrieval-Augmentation eine vektorbasierte Ähnlichkeitssuche in einer Wissensdatenbank umfasst, die verfahrenshistorische Dokumente und Fachliteratur enthält.

Die vektorbasierte Ähnlichkeitssuche dient vorzugsweise der Auswahl kontextuell relevanter Informationen zur inhaltlichen Anreicherung des Erwiderungsentwurfs. Dabei werden Eingabedaten, insbesondere Textpassagen aus Prüfungsbescheid und Anmeldeakte, in numerische Vektorrepräsentationen überführt und mit einem vektorisierten Dokumentenkorpus verglichen. Die Wissensdatenbank umfasst vorzugsweise verfahrenshistorische Schriftstücke aus früheren Patentverfahren sowie einschlägige Fachliteratur, etwa Kommentierungen oder technische Gutachten. Durch diese strukturierte Anreicherung wird das Sprachmodell in die Lage versetzt, fundierte und referenzierte Aussagen zu generieren, wodurch argumentative Qualität und inhaltliche Stützung der Erwiderung verbessert werden. Die Nutzung semantischer Ähnlichkeitsmaße erlaubt es dem System, auch begrifflich abweichende, aber inhaltlich verwandte Dokumente zu identifizieren, was die Tiefe und Flexibilität der Informationsbereitstellung erhöht.

In einem weiteren Aspekt wird vorgeschlagen, dass das Sprachmodell auf einem Korpus historischer Prüfungsbescheid-Erwiderungspaare mit bekannter Erteilungsentscheidung feingetuned ist.

Das Sprachmodell wird vorzugsweise durch sogenanntes Fine-Tuning weiterentwickelt, wobei auf einem speziell kuratierten Datensatz trainiert wird, der aus historischen Paaren von Prüfungsbescheiden und dazugehörigen Erwiderungsschreiben besteht. Diese Paare sind mit zusätzlichen Informationen versehen, etwa der nachfolgenden Erteilungs- oder Zurückweisungsentscheidung. Auf diese Weise lernt das Modell nicht nur sprachliche Formulierungen, sondern auch, welche Argumentationsstrategien sich in der Vergangenheit als erfolgreich erwiesen haben. Die Trainingsdaten sind idealerweise nach Jurisdiktion, Fachgebiet und Entscheidungsausgang strukturiert, was eine differenzierte Modellanpassung ermöglicht. Dies verbessert die situationsgerechte Erzeugung von Textvorschlägen, erhöht deren rechtliche Treffsicherheit und reduziert das Risiko unpassender oder formell unzulässiger Aussagen.

In einem weiteren Aspekt wird vorgeschlagen, dass das Konsistenzprüfmodul eine syntaktische Zerlegung des Anspruchssatzes verwendet, um jede Bezugnahme im Erwiderungsentwurf auf Merkmale des Anspruchswortlauts zu verifizieren.

Zur Überprüfung der inhaltlichen Konsistenz zwischen Erwiderungsentwurf und Anspruchssatz wird eine syntaktische Zerlegung eingesetzt, vorzugsweise in Form eines Parsing-Verfahrens, das den Anspruchssatz in seine grammatikalischen und semantischen Bestandteile aufgliedert. Dabei werden einzelne Merkmale identifiziert, klassifiziert und mit Referenzen im Entwurf abgeglichen. Ziel ist es, jede Bezugnahme im generierten Text mit einem konkreten Merkmal des Anspruchswortlauts zu verbinden und auf ihre formale Übereinstimmung zu prüfen. Diese Herangehensweise reduziert das Risiko, dass Aussagen im Entwurf auf nicht beanspruchte oder fehlerhaft interpretierte technische Merkmale Bezug nehmen. Gleichzeitig wird eine strukturierte Nachvollziehbarkeit der Argumentationslinie unterstützt, was die manuelle Überprüfung durch den Anwender vereinfacht und die Qualitätssicherung im Gesamtprozess stärkt.

In einem weiteren Aspekt wird vorgeschlagen, dass der Erwiderungsentwurf automatisch an die formalen Vorgaben der gewählten Jurisdiktion angepasst wird, indem das Sprachmodell prozedurale Passagen gemäß dem jeweiligen Regelsatz einfügt.

Zur Anpassung des Erwiderungsentwurfs an die formalen Anforderungen einer bestimmten Jurisdiktion wird vorzugsweise ein Regelwerk herangezogen, das verfahrensspezifische Textbausteine, Formatierungsvorgaben und juristische Strukturen vorgibt. Das Sprachmodell wird dazu verwendet, solche prozeduralen Abschnitte gezielt in den Entwurf einzufügen. Diese Passagen umfassen beispielsweise einleitende Hinweise auf die Aktenlage, standardisierte Anträge oder Schlussformulierungen entsprechend den jeweiligen amtlichen Erwartungen. Durch die automatische Einfügung solcher Elemente wird die formale Akzeptanz des Dokuments durch die Patentbehörde erhöht und der manuelle Formatierungsaufwand für den Bearbeiter reduziert. Gleichzeitig wird sichergestellt, dass nationale oder regionale Unterschiede im Aufbau der Erwiderung berücksichtigt werden.

In einem weiteren Aspekt wird vorgeschlagen, dass eine interaktive Benutzerschnittstelle bereitgestellt wird, über die ein Anwender Textsegmente akzeptieren, verwerfen oder bearbeiten kann, woraufhin das Sprachmodell iterativ einen angepassten Erwiderungsentwurf erzeugt.

Eine interaktive Benutzerschnittstelle ermöglicht es dem Anwender vorzugsweise, gezielt in den Generierungsprozess des Erwiderungsentwurfs einzugreifen. Über diese Oberfläche können einzelne Textsegmente markiert, akzeptiert, verworfen oder durch eigene Formulierungen ersetzt werden. Das Sprachmodell reagiert darauf, indem es auf Basis der Eingriffe eine neue Version des Entwurfs erzeugt. Dieser iterative Prozess erlaubt eine individuelle Feinjustierung bei gleichzeitiger Beibehaltung der ursprünglichen Systemlogik und Argumentationsstruktur. Die Kombination aus automatisierter Generierung und menschlicher Korrektur führt zu einer gesteigerten Akzeptanz beim Anwender und zu einer optimierten Ergebnisqualität. Die Schnittstelle ist vorzugsweise webbasiert und stellt editierbare Abschnitte in semantisch abgegrenzten Modulen dar, was die Orientierung und Bedienbarkeit vereinfacht.

In einem weiteren Aspekt wird vorgeschlagen, dass das Sprachmodell zusätzlich Änderungsvorschläge für den Anspruchssatz generiert, sofern der Prüfungsbescheid Anspruchsbeanstandungen enthält.

Das Sprachmodell kann darüber hinaus so konfiguriert sein, dass es automatisch Änderungsvorschläge für den Anspruchssatz generiert, insbesondere wenn der Prüfungsbescheid Beanstandungen in Bezug auf Klarheit, Neuheit oder erfinderische Tätigkeit enthält. Die Erzeugung solcher Vorschläge erfolgt vorzugsweise unter Berücksichtigung der vom Prüfer genannten Einwände sowie der in der Anmeldeakte enthaltenen Beschreibung und Figuren. Die vorgeschlagenen Änderungen können sowohl sprachliche Präzisierungen als auch strukturelle Umformulierungen beinhalten, etwa durch Aufnahme zusätzlicher technischer Merkmale oder durch Umgruppierung bestehender Merkmalsblöcke. Diese Funktion unterstützt die proaktive Anpassung der Ansprüche im Lichte der Prüfung und erleichtert eine strategische Reaktion auf den amtlichen Bescheid. Durch die automatisierte Ausarbeitung von Alternativen kann der Anmelder schneller zwischen Varianten wählen und seine Schutzstrategie gezielter ausrichten.

In einem weiteren Aspekt wird vorgeschlagen, dass Fristen und bibliographische Daten automatisch an ein IP-Management-System übertragen werden.

Fristen und bibliographische Daten, die im Rahmen der Bearbeitung eines Prüfungsbescheids relevant sind, werden vorzugsweise automatisch extrahiert und an ein IP-Management-System übermittelt. Solche Systeme dienen der Verwaltung von Patentakten, Fristen, Gebühren und Zuständigkeiten und werden in Kanzleien oder Unternehmensabteilungen für gewerblichen Rechtsschutz eingesetzt. Die automatische Übertragung umfasst vorzugsweise Eintragungen wie Aktenzeichen, Zustellungsdatum des Bescheids, gesetzte Erwiderungsfristen sowie Anmelderdaten. Durch die Integration mit dem IP-Management-System entfällt eine manuelle Erfassung dieser Informationen, wodurch Übertragungsfehler vermieden und die Effizienz administrativer Abläufe erhöht wird. Zudem kann so eine fristgerechte Bearbeitung durch systemseitige Erinnerungsfunktionen besser unterstützt werden.

In einem weiteren Aspekt wird vorgeschlagen, dass bei der Retrieval-Augmentation zusätzlich eine externe Datenbank mit amtlichen Entscheidungen und Rechtsprechungszitaten abgefragt wird, um stützende Belege in den Erwiderungsentwurf einzufügen.

Die Retrieval-Augmentation wird vorzugsweise erweitert, indem zusätzlich externe Datenbanken mit amtlichen Entscheidungen und Zitaten aus der Rechtsprechung abgefragt werden. Diese externen Quellen enthalten typischerweise veröffentlichte Entscheidungen von Patentämtern und Gerichten, die sich auf vergleichbare Fallkonstellationen oder rechtliche Argumentationen beziehen. Durch die Einbindung solcher Inhalte kann das Sprachmodell gezielt stützende Belege in den Erwiderungsentwurf integrieren, etwa zur Bestätigung der Auslegungsweise eines Begriffs oder zur Verdeutlichung der erfinderischen Tätigkeit. Die semantische Suche in diesen externen Quellen erfolgt vorzugsweise über vektorbasierte Methoden, um auch kontextuell relevante, aber nicht wortidentische Inhalte auffinden zu können. Die argumentative Fundierung durch Referenz auf anerkannte Entscheidungen erhöht die Qualität und Nachvollziehbarkeit des Antwortdokuments deutlich.

In einem weiteren Aspekt wird vorgeschlagen, dass die Konsistenzprüfung symbolische Logik einsetzt, um Antezedenzbezüge und Nummerierungskohärenz sicherzustellen.

Bei der Konsistenzprüfung wird vorzugsweise symbolische Logik eingesetzt, um die formale Struktur des Textes zu analysieren. Symbolische Logik bezeichnet in diesem Zusammenhang ein regelbasiertes System, das Aussagen in formalisierter Syntax (z. B. Prädikatenlogik) abbildet und auf logische Konsistenz prüft. Insbesondere werden Antezedenzbezüge, also Rückverweise auf frühere Aussagen, sowie die korrekte Nummerierung von Merkmalen im Erwiderungsentwurf überprüft. So kann festgestellt werden, ob zum Beispiel eine Begründung korrekt auf ein beanspruchtes Merkmal Bezug nimmt oder ob logische Ketten nicht unterbrochen sind. Diese strukturierte Prüfung ergänzt die Sprachverarbeitung durch das Modell um eine formale Sicherheitsschicht, die unabhängig von stilistischen oder semantischen Variationen arbeitet. Dadurch wird die innere Stringenz des Dokuments gestärkt und eine kohärente Argumentationsführung unterstützt.

In einem weiteren Aspekt wird vorgeschlagen, dass der Erwiderungsentwurf als Dokument mit maschinenlesbaren Metadatenfeldern, wie etwa Anspruchsmapping oder Objection-Tags, sowie einem menschenlesbaren Antworttext ausgegeben wird.

Der erzeugte Erwiderungsentwurf wird vorzugsweise in einem Ausgabeformat bereitgestellt, das sowohl menschenlesbare als auch maschinenlesbare Bestandteile umfasst. Der menschenlesbare Teil enthält den Fließtext der Erwiderung mit argumentativer Struktur, wie sie von einem Prüfer erwartet wird. Zusätzlich werden maschinenlesbare Metadatenfelder eingefügt, beispielsweise zur Verknüpfung bestimmter Textabschnitte mit den jeweiligen Patentansprüchen ("Anspruchsmapping"') oder zur Kennzeichnung bestimmter Arten von Beanstandungen ("Objection-Tags"). Diese strukturierte Annotation ermöglicht eine gezielte Nachbearbeitung, erleichtert die Integration in IP-Management-Systeme und erlaubt eine automatisierte Auswertung von Bearbeitungsprozessen oder Prüfungsmustern. Durch die maschinenlesbare Auszeichnung ist zudem eine Indexierung und Wiederverwendung der Inhalte für Schulungs-, Analyse- oder Qualitätssicherungszwecke möglich.

In einem weiteren Aspekt wird vorgeschlagen, dass sämtliche Daten lokal auf einem verschlüsselten Server verarbeitet werden, wobei das Sprachmodell ausschließlich on-premise ausgeführt wird.

Alle Datenverarbeitungsschritte erfolgen vorzugsweise lokal auf einem verschlüsselten Server, wodurch eine besonders datenschutzgerechte Umsetzung realisiert wird. Der Server stellt sicher, dass weder Dokumente noch Nutzerinteraktionen nach außen übertragen werden. Das eingesetzte Sprachmodell wird ebenfalls ausschließlich on-premise ausgeführt, d. h. innerhalb der internen IT-Infrastruktur des Betreibers. Ein derartiger Betrieb gewährleistet die Einhaltung von Vertraulichkeitsanforderungen, insbesondere im Zusammenhang mit nicht veröffentlichten Patentanmeldungen oder unternehmenssensiblen Informationen. Die lokale Ausführung reduziert die Abhängigkeit von externen Cloud-Diensten, ermöglicht eine vollständige Kontrolle über alle Prozessschritte und vereinfacht die Einhaltung regulatorischer Anforderungen, wie sie etwa bei Auftragsdatenverarbeitung gemäß DSGVO gelten.

In einem weiteren Aspekt wird vorgeschlagen, dass die bei der Retrieval-Augmentation eingesetzte vektorbasierte Ähnlichkeitssuche auf einer Repräsentation der Begriffe durch Embeddings basiert, wobei entweder statische oder dynamische (kontextabhängige) Wort- oder Satz-Embeddings verwendet werden. Dabei werden Begriffe oder Passagen aus dem Prüfungsbescheid oder der Anmeldeakte durch ein Sprachmodell in einen kontinuierlichen Vektorraum abgebildet. Die Ähnlichkeit zwischen einem Anfragevektor und Dokumentenvektoren aus der Wissensdatenbank wird vorzugsweise über das Skalarprodukt, insbesondere die Kosinusähnlichkeit, bestimmt. Es wird bevorzugt, dass Begriffe oder Passagen, deren Vektoren innerhalb eines vorgegebenen Abstandsmaßes - beispielsweise innerhalb eines definierten Radius in Bezug auf den Anfrageterm - liegen, als semantisch ähnlich eingestuft und zur Kontextanreicherung herangezogen werden. Dadurch können auch semantisch verwandte, aber nicht identisch formulierte Inhalte aus der Datenbank in die Erwiderungsgenerierung einfließen. Die dynamische Kontextualisierung mittels Transformer-basierter Embeddings erlaubt es dabei insbesondere, disambiguierte Bedeutungen in Abhängigkeit vom Verwendungskontext präzise zu berücksichtigen.

In einem weiteren Aspekt wird vorgeschlagen, dass das System eine semantische Zuordnung zwischen den im Text der Anmeldung verwendeten Bezugszeichen und den grafischen Darstellungselementen in den Figuren durchführt (Feature-Mapping). Dazu werden grafische Elemente in den Figuren automatisiert klassifiziert, insbesondere dahingehend, ob sie Komponenten eines Verfahrensablaufs (z. B. Prozessblöcke, Ablaufpfeile, Zustandsdiagramme) oder strukturelle Vorrichtungskomponenten (z. B. Module, Sensoren, Baugruppen) repräsentieren. Die Zuordnung erfolgt vorzugsweise unter Einsatz bildanalytischer Verfahren, ergänzt durch textuelle Referenzen in der Beschreibung oder den Ansprüchen. Anhand dieser Informationen kann das System erkennen, ob sich eine bestimmte Figur auf ein Verfahren oder auf eine Vorrichtung bezieht und welche Bezugszeichen darin abgebildet und benannt sind. In Kombination mit dem Anspruchssatz ergibt sich eine präzisierte Mapping-Information, die insbesondere für das maschinenlesbare Tagging im Erwiderungsentwurf (z. B. zur Verknüpfung zwischen Figuren und Anspruchsmerkmalen) von Vorteil ist. Die Fähigkeit zur kontextsensitiven Abbildung grafischer Inhalte auf die technische Lehre stellt eine Grundlage für weitergehende Automatisierungsfunktionen dar, etwa zur Identifikation von Verfahrensdarstellungen in Sequenzdiagrammen, Flussdiagrammen oder expliziten Verfahrensstufen in den Zeichnungen.

Die elektronischen Eingabedokumente werden vorzugsweise durch eine Layoutanalyse in strukturell und technisch adressierbare Segmente zerlegt. Hierbei werden insbesondere Textblöcke, Tabellen, Anspruchsnummern, Merkmalsgliederungen, Figurenbeschriftungen, Bezugszeichenlisten, Absätze des Prüfungsbescheids sowie Zitate aus Entgegenhaltungen erkannt und jeweils mit einem positionsbasierten Dokumentanker versehen. Bei bildbasierten Dokumentbestandteilen kann eine optische Zeichenerkennung durchgeführt werden, wobei jedem erkannten Textbestandteil ein OCR-Konfidenzwert zugeordnet wird. Segmente mit einem OCR-Konfidenzwert unterhalb eines vorgegebenen Schwellenwertes werden für eine automatische Weiterverarbeitung gesperrt oder einer separaten Validierung zugeführt.

Die Retrieval-Augmentation wird in einer bevorzugten Ausführungsform nicht als allgemeine inhaltliche Suche durchgeführt, sondern als ressourcenoptimierte Auswahl technischer Dokumentsegmente unter Berücksichtigung eines vorgegebenen Token-, Speicher- und/oder Rechenzeitbudgets. Hierzu werden mehrere getrennte Indizes bereitgestellt, insbesondere ein Anspruchsindex, ein Beschreibungsindex, ein Figurenindex, ein Prüfungsbescheidindex und ein Entgegenhaltungsindex. Für eine Anfrage wird zunächst eine Teilmenge relevanter Segmente anhand einer gewichteten Kombination aus Vektorähnlichkeit, Schlüsselwortübereinstimmung, Graphabstand im Anspruchsgraphen, Dokumenttypgewichtung und Dokumentanker-Nähe bestimmt. Anschließend werden semantisch redundante Segmente entfernt und die verbleibenden Segmente in einer Reihenfolge ausgewählt, die das vorgegebene Kontextfenster des Sprachmodells nicht überschreitet.

Durch die graph- und layoutbasierte Auswahl der Kontextsegmente wird die Anzahl der an das Sprachmodell zu übergebenden Token reduziert, ohne dass die strukturelle Abdeckung der für die Prüfung relevanten Anspruchsmerkmale verloren geht. Dadurch werden Speicherzugriffe, Inferenzzeit und Rechenlast der Datenverarbeitungsanlage verringert. Ferner wird vermieden, dass lange elektronische Akten vollständig oder mehrfach an das Sprachmodell übergeben werden müssen. Die Erfindung trägt somit auf die technischen Gegebenheiten der Datenverarbeitungsanlage, insbesondere begrenzte Kontextfenster, begrenzten Arbeitsspeicher, begrenzten Grafikspeicher und begrenzte Rechenressourcen, Rücksicht.

In einer weiteren Ausführungsform wird ein generierter Erwiderungsentwurf in einzelne Textsegmente zerlegt, wobei jedes Textsegment mit einem oder mehreren Knoten des Anspruchsgraphen und mit einem oder mehreren Dokumentankern verknüpft wird. Erkennt das Konsistenzprüfmodul eine fehlende, widersprüchliche oder nicht eindeutige Zuordnung, wird nicht der gesamte Erwiderungsentwurf erneut erzeugt. Stattdessen wird lediglich das fehlerhafte Textsegment oder eine begrenzte Gruppe abhängiger Textsegmente erneut generiert. Hierzu wird ein reduzierter Kontext gebildet, der ausschließlich die dem betroffenen Anspruchsknoten, den zugehörigen Dokumentankern und den unmittelbar benachbarten Graphknoten zugeordneten Dokumentsegmente enthält.

Die segmentweise Regeneration reduziert die Anzahl der für eine Korrekturschleife erforderlichen Modellaufrufe und die jeweilige Eingabelänge der Modellaufrufe. Dies führt zu einer Verringerung des Speicherbedarfs, der Rechenzeit und der Datenübertragung zwischen Speichereinrichtung, Prozessor und gegebenenfalls Grafikprozessor. Zugleich bleibt die maschinenlesbare Verknüpfung zwischen erzeugtem Textsegment und zugrunde liegendem Anspruchsmerkmal erhalten, wodurch eine wiederholbare technische Prüfung der Dokumentstruktur ermöglicht wird.

Das Konsistenzprüfmodul erzeugt aus jedem generierten Textsegment vorzugsweise eine formalisierte Aussage, insbesondere ein Tripel aus einem Bezugselement, einer Aussageklasse und einem Zielobjekt. Das Bezugselement kann ein Anspruchsmerkmal, ein Bezugszeichen, eine Figur, ein Dokumentabschnitt oder eine Entgegenhaltung sein. Die Aussageklasse kann beispielsweise eine Offenbarung, eine Nichtoffenbarung, eine Unterscheidung, eine Wirkung oder eine Zuordnung betreffen. Das Zielobjekt verweist auf einen Dokumentanker oder einen Knoten des Anspruchsgraphen. Die Tripel werden mit dem Anspruchsgraphen abgeglichen, wobei wenigstens eine Konsistenzregel prüft, ob ein im Textsegment genanntes Anspruchsmerkmal, Bezugszeichen oder Antezedenzobjekt in der zugrunde liegenden graphbasierten Datenstruktur vorhanden ist.

Bei einer fehlgeschlagenen Konsistenzprüfung erzeugt das Konsistenzprüfmodul vorzugsweise einen maschinenlesbaren Fehlercode. Der Fehlercode kann insbesondere anzeigen, dass ein Anspruchsmerkmal nicht im Anspruchsgraphen vorhanden ist, dass ein Bezugszeichen keinem grafischen Darstellungselement zugeordnet werden konnte, dass ein Antezedenzbezug fehlt, dass eine Quellenstelle nicht auffindbar ist oder dass eine generierte Aussage auf einem Dokumentsegment mit zu niedriger OCR-Konfidenz beruht. Der Fehlercode wird zusammen mit dem betroffenen Textsegment, dem zugehörigen Dokumentanker und dem betroffenen Graphknoten in einem Prüfprotokoll gespeichert.

In einer bevorzugten Ausführungsform wird für zumindest eine technische Zeichnung der Anmeldeunterlagen eine bildanalytische Verarbeitung durchgeführt. Dabei werden grafische Primitive, insbesondere Linien, Pfeile, Leader-Lines, Rechtecke, Kreise, gestrichelte Verbindungslinien, Blockdiagrammelemente und Beschriftungsbereiche erkannt. Zusätzlich werden in der Figur enthaltene Bezugszeichen mittels optischer Zeichenerkennung extrahiert und jeweils mit einer positionsbezogenen Bounding Box versehen. Aus den erkannten grafischen Primitiven und den erkannten Bezugszeichen wird ein Zuordnungsgraph erzeugt, der Bezugszeichen und grafische Darstellungselemente als Knoten sowie mögliche Zuordnungen als gewichtete Kanten enthält.

Die Zuordnung eines Bezugszeichens zu einem grafischen Darstellungselement erfolgt vorzugsweise durch Minimierung einer Kostenfunktion. Die Kostenfunktion berücksichtigt zumindest einen Abstand zwischen der Bounding Box des Bezugszeichens und dem grafischen Darstellungselement, eine erkannte Leader-Line oder Verbindungslinie, eine relative Lage des Bezugszeichens zum Darstellungselement, eine Übereinstimmung mit einer im Beschreibungstext ermittelten Bezeichnung und eine Übereinstimmung mit einem Knoten des Anspruchsgraphen. Bei mehreren möglichen Zuordnungen wird diejenige Zuordnung ausgewählt, deren Kostenwert unterhalb eines vorgegebenen Schwellenwertes liegt und zugleich eine höhere Konfidenz als konkurrierende Zuordnungen aufweist.

Das bildanalytische Feature-Mapping ermöglicht eine robuste maschinelle Verknüpfung zwischen grafischen Darstellungselementen einer technischen Zeichnung und textuellen Dokumentbestandteilen. Hierdurch können Figureninformationen in die graphbasierte Dokumentstruktur aufgenommen werden, ohne dass die Figur manuell annotiert werden muss. Die erzeugte Zuordnung verbessert die technische Weiterverarbeitung der elektronischen Anmeldungsunterlagen, insbesondere die automatische Validierung von Bezugszeichen, die Detektion fehlender oder widersprüchlicher Figurenbezüge und die gezielte Auswahl figurbezogener Kontextsegmente für die Retrieval-Augmentation.

Das System kann eine lokale Inferenzumgebung mit wenigstens einem Hauptprozessor, wenigstens einem Grafikprozessor und wenigstens einer verschlüsselten Speichereinrichtung aufweisen. Ein Ressourcenplanungsmodul bestimmt für einzelne Verarbeitungsschritte, ob diese auf dem Hauptprozessor oder auf dem Grafikprozessor ausgeführt werden. Insbesondere können Embedding-Berechnungen und Inferenzschritte mit großer Eingabelänge dem Grafikprozessor zugewiesen werden, während regelbasierte Graphprüfungen und Fehlercode-Erzeugungen auf dem Hauptprozessor ausgeführt werden. Das Ressourcenplanungsmodul kann ferner abhängig von der Größe des Kontextfensters, der Anzahl ausgewählter Dokumentsegmente, der verfügbaren Grafikspeicherkapazität und der erwarteten Modelllaufzeit entscheiden, ob eine Segmentkomprimierung, eine Reduktion des Kontextes oder eine segmentweise Verarbeitung durchgeführt wird.

Im Unterschied zu einer allgemeinen Verwendung eines Sprachmodells mit Retrieval-Augmentation beruht die vorliegende Ausführungsform auf einer vorgelagerten technischen Rekonstruktion der elektronischen Anmeldungsunterlagen in Form eines layoutverankerten Anspruchs- und Figuren-Graphen. Die Retrieval-Auswahl wird nicht allein anhand einer semantischen Textähnlichkeit durchgeführt, sondern zusätzlich durch technische Strukturinformationen der elektronischen Dokumente, insbesondere Seitenkoordinaten, Bounding Boxes, Anspruchsabhängigkeiten, Graphabstände, OCR-Konfidenzwerte und Figuren-Zuordnungen, gesteuert. Dadurch wird eine reproduzierbare, ressourcenbeschränkte und maschinenprüfbare Verarbeitung komplexer technischer Dokumente ermöglicht.

In einem weiteren Aspekt wird computerimplementiertes Verfahren zur automatisierten Zuordnung von Bezugszeichen zu grafischen Darstellungselementen in einer technischen Zeichnung einer elektronischen Patentanmeldeakte vorgeschlagen, umfassend die Schritte: Durchführen einer Bildanalyse der technischen Zeichnung, wobei grafische Primitive umfassend Linien, Pfeile, Leader-Lines, Umrandungen, Blockdiagrammelemente und/oder Verbindungselemente erkannt werden; Durchführen einer optischen Zeichenerkennung in der technischen Zeichnung, wobei Bezugszeichen erkannt und jeweils mit einer positionsbezogenen Bounding Box und einem OCR-Konfidenzwert versehen werden; Erzeugen eines Zuordnungsgraphen, in welchem erkannte Bezugszeichen und erkannte grafische Darstellungselemente als Knoten repräsentiert werden und mögliche Zuordnungen zwischen Bezugszeichen und grafischen Darstellungselementen als gewichtete Kanten repräsentiert werden; Bestimmen eines Kantengewichts für jede mögliche Zuordnung anhand einer Kostenfunktion, die wenigstens einen Abstand zwischen der Bounding Box eines Bezugszeichens und einem grafischen Darstellungselement, eine erkannte Leader-Line, eine relative Lage und einen textuellen Verweis aus der Beschreibung berücksichtigt; Auswählen einer Zuordnung zwischen einem Bezugszeichen und einem grafischen Darstellungselement, wenn das Kantengewicht einen vorgegebenen Schwellenwert erfüllt; und Bereitstellen einer maschinenlesbaren Mapping-Information, welche das Bezugszeichen, das zugeordnete grafische Darstellungselement, eine Positionsinformation und einen Konfidenzwert enthält.

Vorliegend ist ferner in einem unabhängigen dritten Aspekt ein Verfahren zur automatisierten semantischen Zuordnung von Bezugszeichen zu grafischen Darstellungselementen in den Figuren einer Patentanmeldung beschrieben, umfassend die Schritte:
Analysieren mindestens einer Figur der Patentanmeldung mittels eines bildanalytischen Verfahrens zur automatisierten Klassifikation von Darstellungselementen, insbesondere dahingehend, ob sie Komponenten eines Verfahrensablaufs oder strukturelle Vorrichtungskomponenten repräsentieren;
Ermitteln von Bezugszeichen aus dem Beschreibungstext oder den Ansprüchen der Patentanmeldung, die in der analysierten Figur genannt oder referenziert werden;
Zuordnen der ermittelten Bezugszeichen zu den klassifizierten grafischen Darstellungselementen auf Basis von visuellen, textuellen und/oder positionsbasierten Merkmalen;
Ableiten einer semantischen Mapping-Information, die angibt, ob eine bestimmte Figur eine Vorrichtung, ein Verfahren oder beides darstellt, und welche Bezugszeichen den jeweiligen funktionalen Elementen zugeordnet sind;
Bereitstellen der Mapping-Information in strukturierter Form zur weiteren Verarbeitung, insbesondere zur maschinenlesbaren Annotation von Antworttexten auf Prüfungsbescheide oder zur automatisierten Verknüpfung mit Anspruchsmerkmalen.

In einer Ausführungsform gemäß dem dritten Aspekt umfasst das Verfahren die Extraktion von Bildmerkmalen unter Verwendung eines Convolutional Neural Networks (CNN), das auf technische Zeichnungen trainiert ist, wobei insbesondere rechteckige Prozesssymbole, gerichtete Pfeile oder Blockstrukturen zur Erkennung von Verfahrenskomponenten verwendet werden. In einer weiteren Ausführungsform gemäß dem dritten Aspekt erfolgt die semantische Klassifikation der grafischen Elemente durch Abgleich mit einer Symbolbibliothek, die standardisierte Darstellungsformen technischer Komponenten enthält. In einer Ausführungsform gemäß dem dritten Aspekt werden die Positionen von Bezugszeichen relativ zu den erkannten grafischen Elementen analysiert, um eine wahrscheinlichkeitsgestützte Zuordnung vorzunehmen, wobei Textanker in Beschreibungsabschnitten zur disambiguierenden Validierung herangezogen werden. In einer weiteren Ausführungsform gemäß dem dritten Aspekt wird durch die Kombination der grafischen Klassifikation mit dem Anspruchswortlaut automatisch bestimmt, ob eine Figur im Kontext des jeweiligen Anspruchs auf ein Verfahren, eine Vorrichtung oder eine Mischform Bezug nimmt. In einer Ausführungsform gemäß dem dritten Aspekt wird das resultierende Feature-Mapping mit Annotationen versehen und als JSON- oder XML-Datei ausgegeben, die zur strukturierten Weiterverarbeitung, insbesondere im Rahmen der automatisierten Erwiderungserstellung oder Patentprüfung, eingesetzt werden kann.

Die beiden Verfahren beziehen sich technisch und funktional auf eine gemeinsame erfinderische Gesamtidee: die automatisierte, strukturierte und inhaltsadäquate Verarbeitung von Patentanmeldungsunterlagen zur computergestützten Unterstützung der Erstellung eines Erwiderungsentwurfs auf einen Prüfungsbescheid. Dabei ist das zweite Verfahren (semantisches Feature-Mapping zwischen Figuren und Bezugszeichen) technisch eng mit dem ersten Verfahren verknüpft, da es eine Teilfunktionalität bereitstellt, die als Kontextinformation in das zentrale Generierungsverfahren eingebunden werden kann oder unmittelbar die Qualität der Generierung und Prüfung des Erwiderungsentwurfs erhöht. Konkret dient das Feature-Mapping-Verfahren der strukturierenden Vorverarbeitung und semantischen Erschließung der Anmeldeunterlagen, insbesondere der Zeichnungen, wodurch der nachfolgende Erwiderungsentwurf besser mit dem beanspruchten Gegenstand korreliert werden kann. Es liefert metadatenbasierte Annotationen, die beispielsweise im Konsistenzprüfmodul oder für die automatisierte Zuordnung von Argumentationssegmenten zu Anspruchsmerkmalen verwendet werden können. Beide Verfahren zielen somit auf denselben technischen Effekt ab - nämlich die verbesserte maschinelle Verarbeitung komplexer juristisch-technischer Dokumente zur Erzeugung eines formal und inhaltlich konsistenten Reaktionsdokuments auf amtliche Einwände.

In einem weiteren Aspekt wird ein Computerprogrammprodukt vorgeschlagen, umfassend Befehle, die bei der Ausführung des Programms durch einen Computer diesen veranlassen, die Schritte des vorliegenden Verfahrens in einem seiner Aspekte auszuführen. Das Computerprogrammprodukt umfasst vorzugsweise eine Sammlung von Anweisungen, die in einer oder mehreren Programmiersprachen geschrieben sind und die vorzugsweise darauf ausgelegt sind, die im Verfahren beschriebenen Aufgaben und/oder Funktionen zu erfüllen, wenn sie von einem Computer ausgeführt werden. Die Anweisungen im Programm sind vorzugsweise so gestaltet, dass sie den Computer veranlassen, die verschiedenen Schritte und Abläufe des Verfahrens gemäß den angegebenen Aspekten zu durchlaufen und durchzuführen.

In einem weiteren Aspekt wird ein computerlesbarer Datenträger vorgeschlagen, auf dem ein solches Computerprogrammprodukt gespeichert ist. Dieser computerlesbare Datenträger kann verschiedene physische Medien umfassen, wie CDs, DVDs, USB-Sticks, Festplatten oder Halbleiterspeicher, beispielsweise SSDs, die von Computern oder ähnlichen elektronischen Geräten gelesen werden können. Das auf dem Datenträger gespeicherte Computerprogrammprodukt umfasst vorzugsweise eine Sammlung von Anweisungen oder Code, die von einem Computer ausgeführt werden können, um spezifische Funktionen oder Aufgaben zu erfüllen. Das Programm kann in verschiedenen Programmiersprachen geschrieben sein und unterschiedliche Komponenten wie ausführbare Dateien, Bibliotheken, Konfigurationsdateien und Dokumentationen enthalten. Der Datenträger ermöglicht es vorzugsweise dem Computer, das darauf gespeicherte Programm zu lesen und auszuführen, um die vorgesehenen Funktionen zu realisieren.

Weitere mögliche Ausgestaltungen, Weiterbildungen, Aspekte und/oder Implementierungen der Erfindung weisen auch nicht explizit genannte Kombinationen von den zuvor genannten oder nachstehend noch zu erläuternden Merkmalen auf. Eine, ein wird vorliegend als "mindestens eine" bzw. "mindestens ein" verstanden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.
- Fig. 1: zeigt ein schematisches Flussdiagramm eines Ausführungsbeispiels eines vorliegenden Verfahrens.
- Fig. 2: zeigt eine schematische Darstellung zu dem vorliegenden Verfahren und System.
- Fig. 3: zeigt ein schematisches Flussdiagramm eines Ausführungsbeispiels eines vorliegenden Verfahrens.

### Detaillierte Beschreibung der Zeichnungen

In den Figuren der Zeichnungen bezeichnen gleiche Bezugszeichen gleiche oder funktionsgleiche Elemente, Bauteile oder Komponenten, soweit nichts Gegenteiliges angegeben ist.

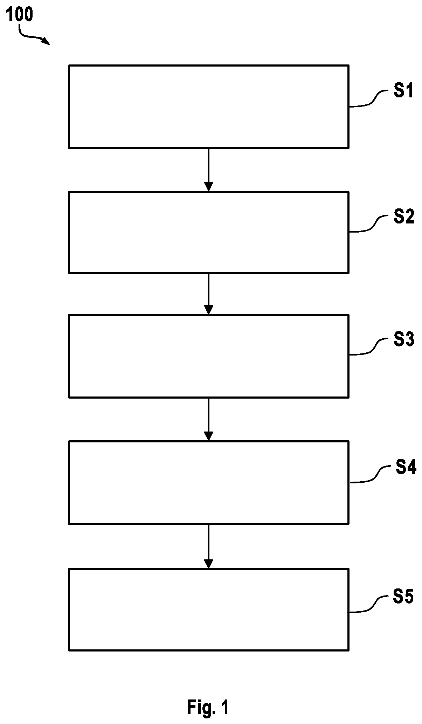

Fig. 1 zeigt ein schematisches Flussdiagramm eines Verfahrens zur automatisierten Erstellung eines Erwiderungsentwurfs auf einen Prüfungsbescheid zu einer Patentanmeldung.

Das Verfahren kann in einer beliebigen Ausführungsform zumindest teilweise durch ein System 100 ausgeführt werden, das hierzu mehrere zum Teil nicht näher dargestellte Komponenten, beispielsweise eine oder mehrere Bereitstellungseinrichtungen und/oder mindestens eine Auswerte- und Recheneinrichtung umfassen kann. Es versteht sich, dass die Bereitstellungseinrichtung gemeinsam mit der Auswerte- und Recheneinrichtung ausgebildet sein kann oder von dieser unterschiedlich sein kann. Ferner kann das System 100 eine Speichereinrichtung und/oder eine Ausgabeeinrichtung und/oder eine Anzeigeeinrichtung und/oder eine Eingabeeinrichtung umfassen.

Das computerimplementierte Verfahren umfasst mindestens die folgenden Schritte:
In einem Schritt S1 erfolgt ein Empfangen eines Prüfungsbescheids 101 und einer zugehörigen Anmeldeakte in elektronischer Form durch eine Empfangseinheit 102. Der empfangene Prüfungsbescheid 101 umfasst typischerweise die von einer Prüfungsstelle geäußerten Beanstandungen zur eingereichten Patentanmeldung, während die Anmeldeakte sämtliche relevanten Schriftstücke und Angaben zur Anmeldung enthält.

In einem Schritt S2 erfolgt ein Abrufen mindestens eines jurisdiktionsspezifischen Regelsatzes 103 durch eine Regelwerkseinheit 104. Der abgerufene Regelsatz 103 enthält vorzugsweise die formalen und verfahrensspezifischen Anforderungen der zuständigen Patentbehörde, die für die Erstellung des Erwiderungsentwurfs relevant sind.

In einem Schritt S3 erfolgt ein Auffordern eines Sprachmodells 106 zur Generierung eines ersten Erwiderungsentwurfs. Hierzu werden der Inhalt des Prüfungsbescheids 101, die Anmeldeakte sowie der abgerufene Regelsatz 103 als Eingabedaten bereitgestellt. Zusätzlich erfolgt eine kontextuelle Anreicherung durch eine Retrieval-Augmentation, bei der bevorzugt vektorbasierte Ähnlichkeitssuchen in einer Wissensdatenbank 112 durchgeführt werden, um relevante Dokumentenpassagen aus verfahrenshistorischen Quellen und Fachliteratur einzubeziehen.

In einem Schritt S4 erfolgt ein Überprüfen des erzeugten Erwiderungsentwurfs durch ein Konsistenzprüfmodul 108. Dabei wird automatisiert ermittelt, ob jede argumentative Aussage im Entwurf logisch und formal mit dem aktuellen Anspruchssatz übereinstimmt. Hierzu kann das Konsistenzprüfmodul 108 eine syntaktische Analyse des Anspruchswortlauts vornehmen und Referenzen im Text abgleichen.

In einem Schritt S5 erfolgt ein Bereitstellen eines als konsistent validierten Erwiderungsentwurfs in einem strukturierten und editierbaren Ausgabeformat durch eine Ausgabeeinheit 110. Der bereitgestellte Entwurf kann zusätzlich mit maschinenlesbaren Metadatenfeldern versehen sein, beispielsweise zur automatisierten Zuordnung von Argumentationssegmenten zu bestimmten Anspruchsmerkmalen.

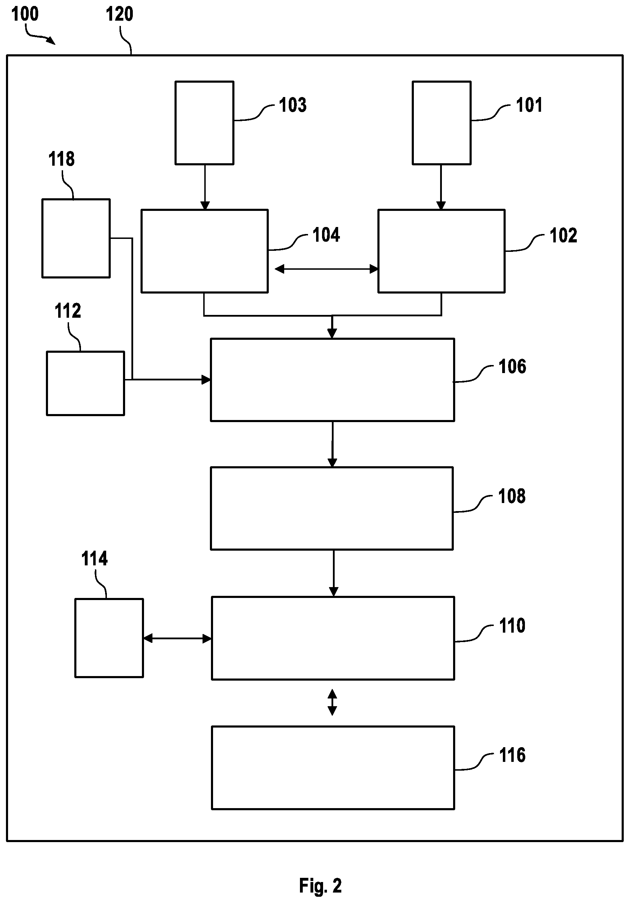

Fig. 2 zeigt ein schematisches Blockdiagramm eines Ausführungsbeispiels des vorliegenden Systems 100 zur automatisierten Erstellung eines Erwiderungsentwurfs auf einen Prüfungsbescheid.

Das System 100 umfasst die Empfangseinheit 102, die ausgebildet ist, Prüfungsbescheide 101 und Anmeldeakten digital zu empfangen und in ein verarbeitbares Format zu überführen. Das daran angeschlossene Regelwerkseinheit 104 dient dazu, kontextabhängig mindestens einen passenden Regelsatz aus einer lokalen oder extern angebundenen Datenquelle abzurufen. Das so konfigurierte System 100 weist weiterhin das Sprachmodell 106 auf, welches zur Erzeugung des ersten Entwurfs aufgerufen wird. Zur Verbesserung der inhaltlichen Qualität des Textes sowie des Wissens des Sprachmodells 106, d.h. zur Anreicherung des Wissens, greift das Sprachmodell 106 dabei optional auf eine Wissensdatenbank 112 zu, in der verfahrensbezogene Dokumente und Literatur hinterlegt sind.

Das System 100 umfasst ferner das Konsistenzprüfmodul 108, das logisch-strukturelle Übereinstimmungen zwischen dem generierten Text und dem beanspruchten Gegenstand überprüft. Die Ausgabeeinheit 110 übernimmt die strukturierte Ausgabe des geprüften Entwurfs. Zur Unterstützung interaktiver Arbeitsprozesse kann das System 100 zusätzlich eine Benutzerschnittstelle 114 umfassen, über die Anwender Rückmeldungen zum Entwurf geben und Textstellen anpassen können. Optional kann eine Verbindung zu einem IP-Management-System 116 bestehen, in das Fristen und bibliographische Daten automatisch eingepflegt werden. Eine externe Datenbank 118 kann zur Einbindung von rechtsprechungsbasierten Fundstellen genutzt werden. Die gesamte Systemlogik kann vorzugsweise auf einem verschlüsselten Server 120 lokal betrieben werden.

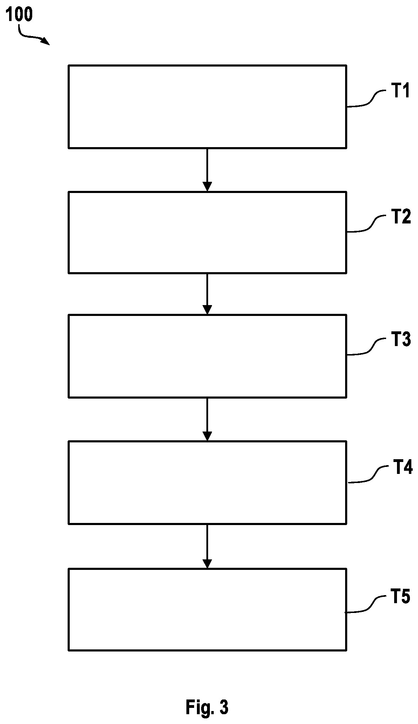

Fig. 3 zeigt ein schematisches Flussdiagramm eines Verfahrens zur automatisierten semantischen Zuordnung von Bezugszeichen zu grafischen Darstellungselementen in den Figuren einer Patentanmeldung.

In einem Schritt T1 erfolgt ein Analysieren mindestens einer Figur der Patentanmeldung mittels eines bildanalytischen Verfahrens. Dabei werden in der Figur enthaltene grafische Elemente automatisch erkannt und klassifiziert. Die Klassifikation umfasst insbesondere eine Differenzierung, ob die erkannten Elemente typische Bestandteile eines Verfahrensablaufs darstellen - wie etwa Prozessblöcke, Ablaufpfeile oder Sequenzdiagramme - oder ob es sich um strukturelle Vorrichtungskomponenten wie Module, Sensoren oder mechanische Elemente handelt.

In einem Schritt T2 erfolgt das Ermitteln von Bezugszeichen aus dem Beschreibungstext und/oder den Ansprüchen der Patentanmeldung. Hierbei werden Textstellen analysiert, in denen eine Bezugnahme auf grafische Elemente erfolgt, z. B. durch Formulierungen wie "siehe Figur 2, Bezugszeichen 120", oder durch definierende Passagen im Haupttext. Die ermittelten Bezugszeichen werden zur Verknüpfung mit den grafischen Elementen in einem Zwischenschritt zwischengespeichert.

In einem Schritt T3 erfolgt das Zuordnen der ermittelten Bezugszeichen zu den klassifizierten grafischen Darstellungselementen. Dieses Matching basiert auf einem kombinierten Ansatz aus visueller Erkennung (z. B. Koordinatenlage im Bild), textueller Referenzierung (z. B. Beschriftungen in der Figur) und semantischem Kontext aus der Beschreibung. Beispielsweise wird ein in der Figur enthaltenes Symbol für eine "Steuereinheit" mit dem entsprechenden Bezugszeichen aus dem Text verknüpft, wenn sowohl Lage, Bezeichnung als auch Textkontext dies stützen.

In einem Schritt T4 wird eine semantische Mapping-Information abgeleitet, die beschreibt, ob die analysierte Figur eine Vorrichtung, ein Verfahren oder eine Mischform darstellt. Zusätzlich wird für jedes grafische Element und das zugehörige Bezugszeichen ein Mapping zu einer Funktionalität erstellt, etwa "Verfahrensschritt X", "Signalfluss" oder "mechanische Baugruppe".

In einem abschließenden Schritt T5 wird die Mapping-Information in strukturierter Form bereitgestellt, insbesondere in einem maschinenlesbaren Format wie XML oder JSON. Die Information kann in nachgelagerten Prozessen genutzt werden, etwa zur Annotation generierter Erwiderungstexte mit Bezug zu bestimmten Anspruchsmerkmalen, zur Unterstützung der Konsistenzprüfung oder zur Analyse der Figur-Aussage-Beziehung bei der Beurteilung der Offenbarungstiefe.

### Bezugszeichenliste

- 100: System
- 101: Prüfbescheid
- 102: Empfangseinheit
- 103: Regelsatz
- 104: Regelwerkseinheit
- 106: Sprachmodell
- 108: Konsistenzprüfmodul
- 110: Ausgabeeinheit
- 112: Wissensdatenbank
- 114: Interaktive Benutzerschnittstell
- 116: IP-Management-System
- 118: Externe Datenbank
- 120: Verschlüsselter Server

- S1: Empfangen
- S2: Abrufen
- S3: Auffordern
- S4: Überprüfen
- S5: Bereitstellen

- T1: Verfahrensschritt
- T2: Verfahrensschritt
- T3: Verfahrensschritt
- T4: Verfahrensschritt
- T5: Verfahrensschritt

## Patentansprüche

1. Verfahren zur automatisierten Erstellung eines Erwiderungsentwurfs auf einen Prüfungsbescheid (101) zu einer Patentanmeldung, wobei das Verfahren die folgenden Schritte umfasst:
Empfangen (S1) des Prüfungsbescheids (101) sowie der zugehörigen Anmeldeakte in elektronischer Form durch eine Empfangseinheit (102);
Abrufen (S2) mindestens eines jurisdiktionsspezifischen Regelsatzes (103) in Abhängigkeit vom empfangenen Prüfungsbescheid (101) durch eine Regelwerkseinheit (104);
Auffordern (S3) eines Sprachmodells (106) unter Verwendung des Inhalts des Prüfungsbescheids, der Anmeldeakte und des abgerufenen Regelsatzes (103) zur Generierung eines ersten Erwiderungsentwurfs, wobei eine Retrieval-Augmentation zur kontextuellen Anreicherung eingesetzt wird;
Überprüfen (S4) des ersten Erwiderungsentwurfs durch ein Konsistenzprüfmodul (108), um automatisiert festzustellen, ob jede argumentative Aussage mit dem aktuellen Anspruchssatz logisch und formal übereinstimmt; und
Bereitstellen (S5) eines als konsistent validierten Erwiderungsentwurfs in einem strukturierten, editierbaren Ausgabeformat durch eine Ausgabeeinheit (110).

2. Verfahren nach Anspruch 1, **dadurch gekennzeichnet, dass** die Retrieval-Augmentation eine vektorbasierte Ähnlichkeitssuche in einer Wissensdatenbank (112) umfasst, die verfahrenshistorische Dokumente und Fachliteratur enthält.

3. Verfahren nach einem der vorhergehenden Ansprüche, **dadurch gekennzeichnet, dass** das Sprachmodell (106) auf einem Korpus historischer Prüfungsbescheid-Erwiderungspaare mit bekannter Erteilungsentscheidung feingetuned ist.

4. Verfahren nach einem der vorhergehenden Ansprüche, **dadurch gekennzeichnet, dass** das Konsistenzprüfmodul (108) eine syntaktische Zerlegung des Anspruchssatzes verwendet, um jede Bezugnahme im Erwiderungsentwurf auf Merkmale des Anspruchswortlauts zu verifizieren.

5. Verfahren nach einem der vorhergehenden Ansprüche, **dadurch gekennzeichnet, dass** der Erwiderungsentwurf automatisch an die formalen Vorgaben der gewählten Jurisdiktion angepasst wird, indem das Sprachmodell (106) prozedurale Passagen gemäß dem jeweiligen Regelsatz einfügt.

6. Verfahren nach einem der vorhergehenden Ansprüche, **dadurch gekennzeichnet, dass** eine interaktive Benutzerschnittstelle (114) bereitgestellt wird, über die ein Anwender Textsegmente akzeptieren, verwerfen oder bearbeiten kann, woraufhin das Sprachmodell (106) iterativ einen angepassten Erwiderungsentwurf erzeugt.

7. Verfahren nach einem der vorhergehenden Ansprüche, **dadurch gekennzeichnet, dass** der erste Erwiderungsentwurf in mehrere Textsegmente zerlegt wird,
dass jedem Textsegment wenigstens ein Knoten des Anspruchsgraphen und wenigstens ein Dokumentanker zugeordnet wird,
dass das Konsistenzprüfmodul für jedes Textsegment eine formalisierte Aussage in Form eines Tripels erzeugt, welches wenigstens ein Bezugselement, eine Aussageklasse und ein Zielobjekt umfasst,
dass das Tripel mit dem Anspruchsgraphen abgeglichen wird, um eine fehlende oder widersprüchliche Bezugnahme auf ein Anspruchsmerkmal, ein Bezugszeichen oder einen Antezedenzbezug zu erkennen,
und dass bei erkannter Inkonsistenz nur das betroffene Textsegment unter Verwendung eines gegenüber dem ersten Erwiderungsentwurf reduzierten Kontextes erneut generiert wird.

8. Verfahren nach einem der vorhergehenden Ansprüche, **dadurch gekennzeichnet, dass** bei der Retrieval-Augmentation zusätzlich eine externe Datenbank (118) mit amtlichen Entscheidungen und Rechtsprechungszitaten abgefragt wird, um stützende Belege in den Erwiderungsentwurf einzufügen.

9. Verfahren nach einem der vorhergehenden Ansprüche, **dadurch gekennzeichnet, dass** die Konsistenzprüfung symbolische Logik nutzt, um Antezedenzbezüge und Nummerierungskohärenz sicherzustellen.

10. Verfahren nach einem der vorhergehenden Ansprüche, **dadurch gekennzeichnet, dass** der Erwiderungsentwurf als Dokument mit maschinenlesbaren Metadatenfeldern menschenlesbarem Antworttext ausgegeben wird.

11. Verfahren nach einem der vorhergehenden Ansprüche, **dadurch gekennzeichnet, dass** sämtliche Daten lokal auf einem verschlüsselten Server (120) verarbeitet werden, wobei das Sprachmodell (106) ausschließlich on-premise ausgeführt wird.

12. Verfahren zur automatisierten semantischen Zuordnung von Bezugszeichen zu grafischen Darstellungselementen in den Figuren einer Patentanmeldung, umfassend die Schritte:
Analysieren mindestens einer Figur der Patentanmeldung mittels eines bildanalytischen Verfahrens zur automatisierten Klassifikation von Darstellungselementen, insbesondere dahingehend, ob sie Komponenten eines Verfahrensablaufs oder strukturelle Vorrichtungskomponenten repräsentieren;
Ermitteln von Bezugszeichen aus dem Beschreibungstext und/oder den Ansprüchen der Patentanmeldung, die in der analysierten Figur genannt und/oder referenziert werden;
Zuordnen der ermittelten Bezugszeichen zu den klassifizierten grafischen Darstellungselementen auf Basis von visuellen, textuellen und/oder positionsbasierten Merkmalen;
Ableiten einer semantischen Mapping-Information, die angibt, ob eine bestimmte Figur eine Vorrichtung, ein Verfahren oder beides darstellt, und welche Bezugszeichen den jeweiligen funktionalen Elementen zugeordnet sind; und
Bereitstellen der Mapping-Information in strukturierter Form zur weiteren Verarbeitung, insbesondere zur maschinenlesbaren Annotation von Antworttexten auf Prüfungsbescheide oder zur automatisierten Verknüpfung mit Anspruchsmerkmalen.

13. Computerprogrammprodukt, umfassend Befehle, die bei der Ausführung des Programms durch einen Computer diesen veranlassen, die Schritte des Verfahrens nach einem der Ansprüche 1 bis 12 auszuführen.

14. Computerlesbarer Datenträger, auf dem das Computerprogrammprodukt nach Anspruch 13 gespeichert ist.

15. System (100) zur automatisierten Erstellung eines Erwiderungsentwurfs auf einen Prüfungsbescheid (101) zu einer Patentanmeldung, wobei das System (100) eine Auswerte- und Recheneinrichtung aufweist, die dazu ausgebildet ist, ein Verfahren mit den Schritten nach einem der Ansprüche 1 bis 12 auszuführen.
